# EUROPEAN PATENT SPECIFICATION

(11) **EP 4 214 092 B1**
(45) Date of publication and mention of the grant of the patent: **22.04.2026**
(21) Application number: 21882301.1
(22) Date of filing: 22.10.2021
(51) Int. Cl.: B60R 3/00

(54) **RUNNING BOARD STEP - 2 PIECES EXTRUSION BOARD**
TRITTBRETTSTUFE-2 - EXTRUSIONSPLATTE
PLANCHE D'EXTRUSION À 2 PIÈCES DE MARCHE DE MARCHEPIED

(30) Priority: 23.10.2020 US 202063104864 P
(43) Date of publication of application: 26.07.2023
(73) Proprietor: Magna Exteriors Inc., Aurora, ON L4G 7K1 (CA)
(72) Inventor: PANTEA, Sorin O., Woodbridge, Ontario L4H 2J5 (CA)
(74) Representative: Witte, Weller und Partner Patentanwälte mbB Stuttgart
(86) International application number: PCT/IB2021/059778
(87) International publication number: WO 2022/084953

(56) References cited:
- US-A- 4 151 895
- US-A1- 2003 011 163
- US-B1- 9 937 865
- US-B1- 9 937 865

## Description

### FIELD OF THE INVENTION

The present invention relates to a running board step adapted for a vehicle.

### BACKGROUND OF THE INVENTION

Running boards are known for assisting with occupant ingress / egress from vehicles as well as access to vehicle roof tops and cargo beds of vehicles, including sport utility vehicles and pickup trucks, often disposed adjacent to a rocker panel. Common running boards are fixed or stationary. Other known running boards actuate between a stored position and at least one step extended position. The user steps onto a step surface of the running board when desired.

A current step board design consists of a closed extruded aluminum section with machined holes. Due to profile configuration of the step board, in most of the cases using a punch die to pierce holes is not feasible with a closed aluminum section.

Accordingly, there is desired a running board step incorporating design features that can be more easily pierced.

US 9,937,865 B1 relates to a step board made up of two shells attached to each other via snap-fit connections at two sides.

US 4,151,895 A1 describes steps for an upright ladder, which has a pair of rails mounted in vertical orientation and between which the steps laterally extend in vertically spaced disposition.

US 2003/0011163 A1 discloses a running board assembly for attachment to a vehicle including an elongated support portion and two cap portions spaced from each other along the support portion, and a step pad connected to the delegated support portion between the two cap portions.

### SUMMARY OF THE INVENTION

The invention is set out in the appended set of claims. Aspects of this description that are not covered by the claims are for explanatory purposes only and do not form part of the invention. In accordance with the present invention, there is provided a 2-piece extruded running board step. The step board has a section split in two - a first and a second section, e.g., an upper and a lower section, operably adapted to be easily pierced. This also allows for a few options to be used to operably attached/secure the at least two sections together.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Figure 1 is a perspective view of a prior art step board;
Figure 2 is a perspective view of a multi-piece step board incorporating attachment features including at least one hook feature, in accordance with the present invention;
Figure 3 is a perspective view of the multi-piece step board incorporating attachment features including at least one hook feature, in accordance with aspects of the present invention;
Figure 4 is a perspective view of the multi-piece step incorporating attachment features and depicting rotation of a first piece to attach at both sides, in accordance with aspects of the present invention;
Figure 5 is a perspective view of the multi-piece step board incorporating attachment features including at least one mechanical feature, in accordance with aspects of the present invention;
Figure 6 is a perspective view of the multi-piece step board incorporating attachment features including adhesive, in accordance with aspects of the present invention; and
Figure 7 is an enlarged perspective view of the multi-piece step board incorporating attachment features including adhesive, in accordance with aspects of the present invention.

### DETAILED DESCRIPTION OF THE PREFERRED EMBODIMENTS

The following description of the preferred embodiment(s) is merely exemplary in nature and is in no way intended to limit the invention, its application, or uses.

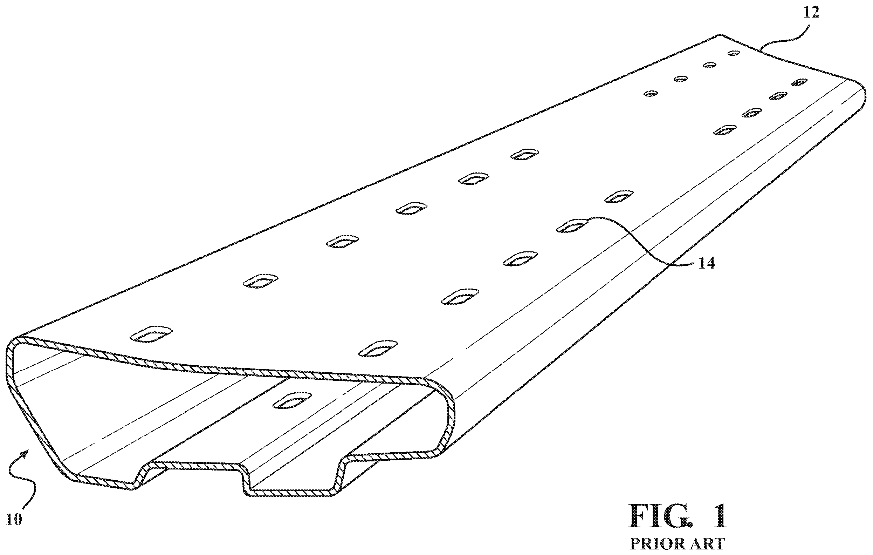

Figure 1 depicts an example of a prior art step board shown generally at 10. The step board 10 design consists of a closed extruded aluminum section with machined holes (holes are required for step mat, end cap, bracket attachment, etc.). The step board 10 is a one-piece closed section of aluminum with machined extrusion ends 12, at both ends, and all the holes 14 in the top surface and bottom surface of the step board 10 are machined. A most cost-effective solution is to pierce these holes 14 and trim the ends 12 in a punch die, but due to the profile configuration, in most of the cases this is not feasible with a closed aluminum section.

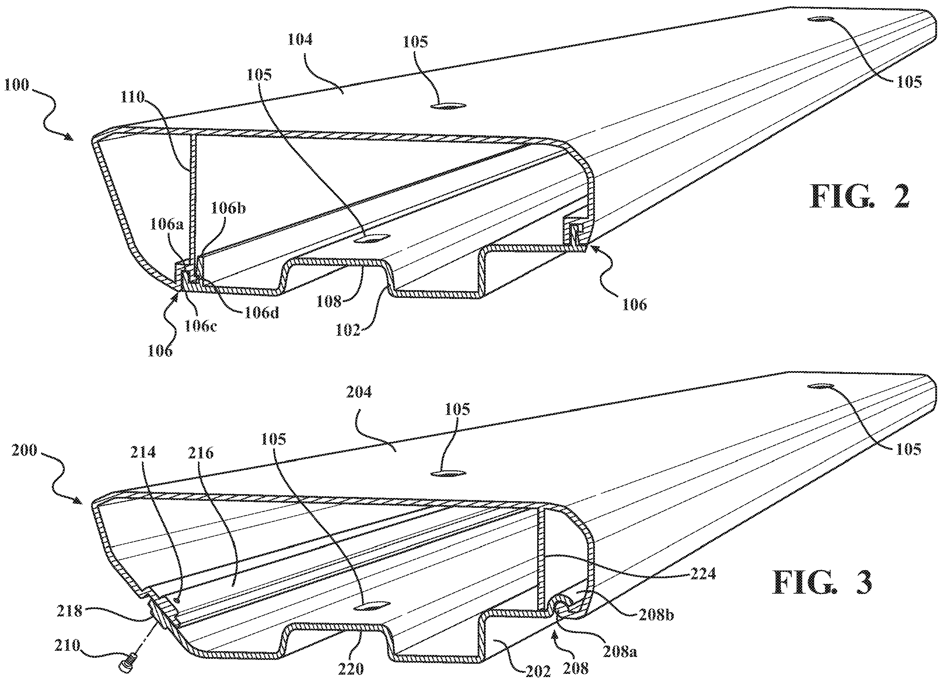

Referring generally to Figures 2-7, in accordance with the present invention, there is provided a step board section split in at least two - a first and second section, e.g., an upper and a lower section, that can then be easily pierced in accordance with aspects of the present invention. The sections incorporate attachment features. After piercing, there are a few options in accordance with the present invention that are used to attach/secure the two sections together.

Referring generally to Figure 2 there is depicted a step board shown generally at 100 in accordance with the present invention that is a split design. The step board 100 is a multi-piece board, most preferably, a two-piece board. The step board 100 includes at least one first piece 102 (e.g., lower section) and at least one second piece 104 (e.g., upper section) that can each be operably easily pierced at predetermined location(s) to create at least one aperture 105; generally, a plurality of apertures 105 at a plurality of predetermined locations (e.g., apertures required for step mats, end caps, bracket attachments, and etc.). The at least one aperture 105 is made before both the first and second pieces 102,104 are operably secured together, e.g., suitable predetermined piercing device, pierced with punch die, etc. At least one attachment feature is provided, shown generally at 106, that is a hook or snap feature. Most preferably, at least two attachment features 106, are provided with corresponding elements operably to connect the first and second pieces together 102 and 104. Figure 2 illustrates each attachment feature 106 is a hook like feature, such as a snap-in feature.

Preferably, the snap features 106,106 are opposingly disposed where the first and second sections 102,104 meet in at least two locations of the step board 100, preferably, generally along longitudinal edges of the sections 102,104 to snap together. Preferably, each snap feature 106 includes corresponding detent to operably snap 102,104 together or hooked together. Both attachment features 106,106 are preferably adapted for the first and second sections 102,104 to snap together.

On at least one of the attachment features 106, at least one interior wall 110 is provided forming part of a receiving portion 106a, e.g., channel, in one of the first or second pieces 102,104. A corresponding lip or flange 106c of the other of the first or second pieces 102,104 fits withing the receiving portion 106a. A second interior wall 106b, preferably with predetermined detent, is formed in one of the first or second pieces 102,104 and forms part of a second channel. A corresponding part 106d of the other piece 102,104 is held against the second wall 106b. Preferably, 106c snaps into place with 106d retaining 106c from backing out when undesired with a corresponding lip or barb. The at least one interior wall 110 additionally provides strength.

By way of example, one of the snap features 106 connects the first and second pieces 102 and 104 at one longitudinal side edge, and then the free side of the first piece 102 (or second piece 104) is rotated until brought into engagement with the unconnected side of the second piece 104 (or first piece 102) and the other snap feature 106 connects the first and second pieces 102 and 104 together.

The apertures 105 are formed in predetermined locations as required for at least one predetermined component or part, e.g., step mats, end caps, bracket attachments, linkage attachments 212 adapted for connecting the running board 100 to the vehicle, and etc.. Figure 2 depicts apertures 105 in the second piece 104, e.g., upper surface for a step surface mat, and at least one aperture 105 on the first piece 102, e.g., along a channel 108 formed in the first piece 102 adapted for strength, predetermined properties, and/or to conceal attachments of predetermined parts, e.g., step deploying linkage brackets, etc.

The first and second sections 102 and 104 are preferably aluminum extrusions. Alternative extrusion materials are contemplated suitable for a step board depending on the particular application without departure from the scope of the present invention. By way of non-limiting example, molded step board sections, lightweight molded material, composite, aluminum, other metal material(s), etc., and any combinations thereof.

More pieces are contemplated than two depending on the particular application without departure from the scope of the present invention.

While Figure 2 generally depicts attachment features 108,108 incorporating a hook feature (snap feature) on both sides, it is understood that any alternative attachment feature or combination of attachment features shown in Figs. 2-7 or described herein are contemplated depending on the application without departure from the scope of the present invention.

Referring generally to Figures 2-7, and more particularly to Figures 3-4, there is depicted the step board shown generally at 200 that is a split design in accordance with the present invention. The step board 200 is a multi-piece board, most preferably, a two-piece board. A first piece 202 (e.g., lower section) and a second piece 204 (e.g., upper section) that can each be easily pierced at predetermined location(s) to create at least one aperture 105; generally, a plurality of apertures 105 at a plurality of predetermined locations as required for at least one predetermined component or part, e.g., step mats, end caps, bracket attachments, linkage attachments 212 adapted for connecting the running board 200 to the vehicle, and etc. The predetermined plurality of apertures 105 are made before both pieces 202,204 are secured together, e.g., suitable predetermined piercing device, pierced with punch die, etc.

At least two attachment features are provided, indicated generally at 208. In accordance with the present invention, there is depicted one first attachment feature that is at least one hook like feature on one side and one second attachment feature that is at least one mechanical attachment on the other side. The hook feature indicated generally at 208 is provided to affix the first and second pieces together 202 and 204 in a first location, e.g., on at least one side such as along a first longitudinal edge. The other side is mechanically secured with a plurality of fasteners 210, e.g., rivets, screws, etc., through a plurality of apertures 214, respectively.

The first attachment feature 208 incorporates a raised lip, flange, welt, or other protrusion formed in one of the first or second pieces 202,204 (e.g., the second piece 204 in Figs. 3-4) and a correspondingly sized integrated channel or retainer portion 208b formed on the other of the first or second pieces 202,204 (e.g., the first piece 202 in Figs. 3-4) forming a mating surface for connecting the first piece 202 to the second piece 204.

The second attachment feature 208 incorporates a mechanical attachment. Preferably, there is provided a ridge 218 (alternatively, a plurality of bosses) formed in one of the first or second pieces 202,204 (e.g., the first piece 202 in Figs. 3-4) each with apertures 214 to receive a fastener 210. There is provided a second ridge 216 formed on the other of the first or second pieces 202,204 (e.g., the second piece 204 in Figs. 3-4) with a plurality of apertures 214 to each receive a fastener 210. The plurality of fasteners 210 mechanically secure the first piece 202 and second piece together 204 along one side of the board 200, while the hook features 208a,208b connect the first piece 202 and second piece 204 together along the other side of the board 200. The ridges can provide a strengthened location operable for attachment of the pieces 202,204, e.g., with fasteners 210, as needed.

The apertures 105 are formed in predetermined locations as required for at least one predetermined component, part, or accessory, e.g., step mats, end caps, bracket attachments, linkage attachments 212 adapted for connecting the running board 200 to the vehicle, and etc. Figures 3-4 depict apertures 105 in the second piece 204, e.g., upper surface for a step surface mat, and at least one aperture 105 on the first piece 202, e.g., along a channel 220 formed in the first piece 202 adapted for strength, predetermined properties, and/or to conceal attachments of predetermined parts, e.g., step deploying linkage brackets, etc.

At least one interior wall 224 is provided, e.g., for predetermined strength or other properties, to form part of either attachment feature, etc.

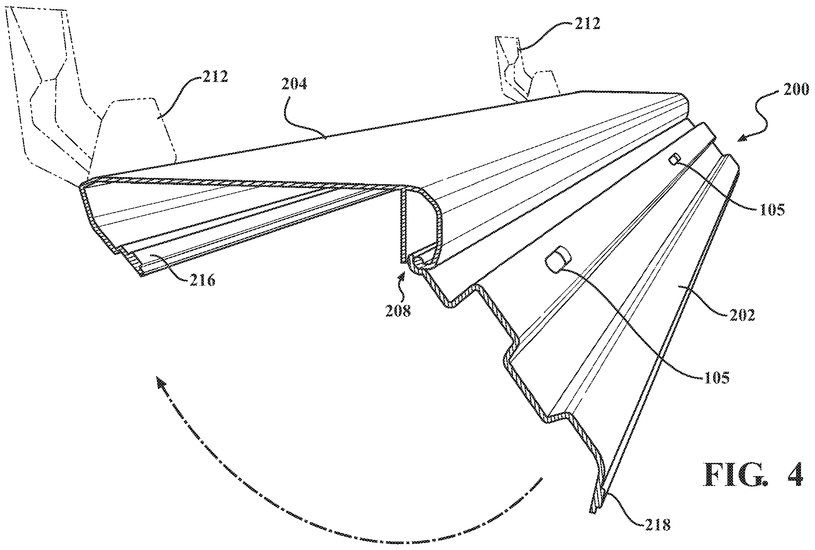

Figure 4 depicts the hook feature 208 connecting the first and second pieces 202 and 204 at a first location (e.g., along the matting longitudinal edges of 202 and 204), and then the first piece 202 is operably rotated generally upward (as indicated by the arrow in Fig. 4) until brought into engagement with the attachment portions of the second piece 204. Each fastener 210 then connects the first and second pieces 202 and 204 together (see Fig. 3) at the mechanical attachment portion 216,218. This arrangement also allows for simpler maintenance and replacement of the first or second sections 202 and 204 when desired.

The first and second sections 202 and 204 are preferably aluminum extrusions. Alternative extrusion materials are contemplated suitable for a step board depending on the particular application without departure from the scope of the present invention. By way of non-limiting example, molded step board sections, lightweight molded material, composite, aluminum, other metal material(s), etc., and any combinations thereof.

More pieces are contemplated than two depending on the particular application without departure from the scope of the present invention.

While Figures 3-4 generally depict attachment features 208,208 incorporating a hook feature on one side and mechanically attached on the other side, it is understood that any alternative attachment feature or combination of attachment features shown in Figs. 2-7 or described herein are contemplated depending on the application without departure from the scope of the present invention.

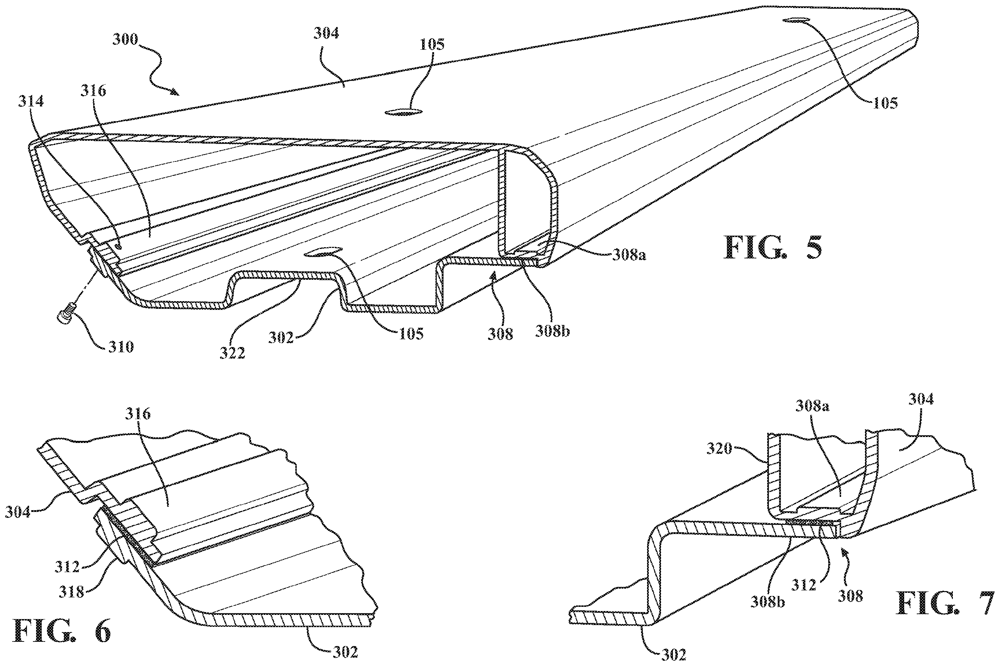

Referring generally to Figures 2-7, and more particularly to Figures 5-7, there is depicted the step board shown generally at 300 that is a split design in accordance with the present invention. The step board 200 is a multi-piece board, most preferably, a two-piece board. A first piece 302 (e.g., lower section) and a second piece 304 (e.g., upper section) that can each be easily pierced at predetermined location(s) to create at least one aperture 105; generally, a plurality of apertures 105 at a plurality of predetermined locations as required for at least one predetermined component or part, e.g., step mats, end caps, bracket attachments, linkage attachments 212 adapted for connecting the running board 200 to the vehicle, and etc. The predetermined plurality of apertures 105 are made before both pieces 202,204 are secured together, e.g., suitable predetermined piercing device, pierced with punch die, etc. In Figures 5-7, there is depicted the first and second sections 302 and 304 mechanically secured in place and also incorporating adhesive, in accordance with the present invention.

At a first attachment feature portion, shown generally at 308, adhesive 312 secures the first and second pieces 302 and 304 together. Preferably, the first attachment feature 308 incorporates a ridge 308a on one of the first or second pieces 302,204 (e.g., the second piece 304 in Figs. 5 and 7). The ridge can provide a strengthened matting interface at the location of attachment of the pieces 302,304, as needed. The first attachment feature portion 308 has a corresponding surface 308b formed on the other of the first or second pieces 302,304 (e.g., the first piece 302 in Figs. 5 and 7) forming a mating surface for connecting the first piece 302 and second piece 304 together with adhesive 312. Thus, on one side of the board 300, the first and second pieces 302,304 are connected with adhesive 312. At least one interior wall 320 is provided, e.g., for predetermined strength or other properties, that preferably further extends in a direction operably to form the surface 308a for adhering one piece (302 or 304) to the corresponding surface 308b of the other piece (304 or 302) with the adhesive 312.

The other side of the board 300 is mechanically secured. At least one, mechanical interference feature 308 is provided to couple the first and second pieces together 302 and 304 on at least one side, e.g., along a first longitudinal edge. An adhesive bond may be used at the mechanical interference 308 areas. The other edge is mechanically secured with a plurality of fasteners 310, e.g., rivets, screws, etc.

Preferably, there is provided a ridge 318 (alternatively, a plurality of bosses) formed in one of the first or second pieces 302,304 (e.g., the first piece 202 in Fig. 5) with apertures 314 each to receive a fastener 310. There is provided a second ridge 316 formed on the other of the first or second pieces 302,304 (e.g., the second piece 304 in Fig. 5) with a plurality of apertures 314 to each receive a fastener 310. The plurality of fasteners 310 mechanically secure the first piece 302 and second piece together 304 along one side of the board 300, while the adhesive 312 connects the first piece 302 and second piece 304 together along the other side of the board 300.

The apertures 105 are formed in predetermined locations as required for at least one predetermined component or part, e.g., step mats, end caps, bracket attachments, linkage attachments 212 adapted for connecting the running board 300 to the vehicle, and etc. Figure 5 depicts apertures 105 in the second piece 304, e.g., upper surface for a step surface mat, and at least one aperture 105 on the first piece 302, e.g., along a channel 322 formed in the first piece 302 adapted for strength, predetermined properties, and/or to conceal attachments of predetermined parts, e.g., step deploying linkage brackets, etc.

Referring generally to Figure 6-7, in accordance with the present invention, there is depicted adhesive bond on both sides instead of mechanically secured in place. Alternatively, adhesive bonding is used in combination with hook / snap features according to any of Figures 2-7 in any combination.

Referring more particularly to Figures 6-7, alternatively, an adhesive bond is used 312 and 312 to secure both sides of the first section 302 and second section 304 together. While Figures 6-7 generally depict attachment features 308 incorporating adhesive to connect the first and second pieces 302 and 304 together on both sides, it is understood that any alternative attachment feature or combination of attachment features shown in Figs. 2-7 or described herein are contemplated depending on the application without departure from the scope of the present invention.

While Figures 5 and 7 generally depict attachment features 308 incorporating adhesive on one side and mechanically attached on the other side, it is understood that any alternative attachment feature or combination of attachment features shown in Figs. 2-7 or described herein are contemplated depending on the application without departure from the scope of the present invention.

Referring to Figures 5-7 generally the first and second sections 302 and 304 are preferably aluminum extrusions. Alternative extrusion materials are contemplated suitable for a step board depending on the particular application without departure from the scope of the present invention. By way of non-limiting example, molded step board sections, lightweight molded material, composite, aluminum, other metal material(s), etc., and any combinations thereof.

Referring to Figures 2-7 generally, it is understood that more pieces (than a first and second) are contemplated depending on the particular application without departure from the scope of the present invention.

While a two 2-piece extruded running board step with a section split in two is described, it is understood that more sections are contemplated depending on the application without departure from the scope of the present invention.

It is understood that more or less apertures 105 can be used depending on the particular application without departure from the scope of the present invention. It is understood that any alternative sizes, shapes, and locations of apertures 105 suitable for the particular application are contemplated without departure from the scope of the present invention.

## Claims

1. A step board assembly adapted for a vehicle, comprising:
a first piece (102, 202, 302) of a step board (100, 200, 300);
a second piece (104, 204, 304) of a step board (100, 200, 300), wherein the first and second pieces (102, 202, 302, 104, 204, 304) form a 2-piece extrusion board comprising the first and second pieces (102, 202, 302, 104, 204, 304), wherein the first piece (102; 202; 302) constitutes a lower section of the 2-piece extrusion board and the second piece (104; 204; 304) constitutes an upper section of the 2-piece extrusion board;
a plurality of apertures (105) pierced in the first and/or second piece (102, 202, 302, 104, 204, 304) at predetermined locations before both the first and second pieces (102, 202, 302, 104, 204, 304) are operably secured together and adapted for selectively connecting at least one predetermined component (212) to the step board (100, 200, 300) wherein the pierced aperture (105) on an upper surface of the second piece (104; 204; 304) is adapted for attachment of a step surface mat; and
at least two attachment features (106, 208, 308) connecting the first and second pieces (102, 202, 302, 104, 204, 304) together in two locations, wherein at least one interior wall (110, 224, 320) is provided forming part of either attachment feature (106, 208, 308).

2. The step board assembly of claim 1, wherein one of the attachment features (106, 208, 308) incorporates a mechanical attachment (216, 218) with a plurality of fasteners (210, 310) connecting the first and second pieces (102, 202, 302, 104, 204, 304) together along one location of the board (100, 200, 300), and the other of the attachment features (106, 208, 308) incorporates adhesive (312) connecting the first and second pieces (102, 202, 302, 104, 204, 304) together along another location of the board (100, 200, 300).

3. The step board assembly of claim 1, wherein the step board assembly is a running board step adapted for connecting to the vehicle; or
wherein the at least two attachment features (106, 208, 308) include at least one pair of snap attachments to connect the first and second pieces (102, 202, 302, 104, 204, 304) together in the two locations.

4. The step board assembly of claim 1, wherein the at least two attachment features (106, 208, 308) include at least one hook attachment (208, 208a, 208b) and at least one mechanical attachment (216, 218) to connect the first and second pieces (102, 202, 302, 104, 204, 304) together in the two locations.

5. The step board assembly of claim 1, wherein the at least two attachment features (106, 208, 308) include at least one pair of mechanical attachments (216, 218) to mechanically secure the first and second pieces (102, 202, 302, 104, 204, 304) together in the two locations; or
wherein the first and second pieces (102, 202, 302, 104, 204, 304) are adhesive bonded together in the two locations.

6. The step board assembly of claim 1, wherein a first of the at least two attachment features (106, 208, 308) is a hook configuration (208, 208a, 208b) operably securing the first and second pieces (102, 202, 302, 104, 204, 304) together on one side, wherein the hook configuration (208, 208a, 208b) allows one of the first or second pieces (102, 202, 302, 104, 204, 304) to rotate to bring the other side into contact with the second piece (104, 204, 304) for connecting the other side with the other attachment feature.

7. The step board assembly of claim 1, wherein one of the attachment features (106, 208, 308) incorporates a mechanical attachment (216, 218) with a plurality of fasteners (210, 310).

8. The step board assembly of claim 1, wherein the first and second piece (104, 204, 304) are each aluminum extrusions.

9. The step board assembly of claim 1, wherein the plurality of apertures (105) is adapted to connect a plurality of attachment brackets to the step board (100, 200, 300), the plurality of attachment brackets adapted for operably connecting to the vehicle.

10. The step board assembly of claim 1, wherein the plurality of apertures (105) is adapted to connect a plurality of linkages (212) to the step board (100, 200, 300), the plurality of linkages (212) adapted for operably connecting to the vehicle; or
further comprising a plurality of attachment brackets operably connected with the plurality of apertures (105) to the step board (100, 200, 300) and adapted to operably connect to the vehicle to provide a vehicle step.

11. The step board assembly of claim 1, further comprising a plurality of attachment brackets and/or linkages (212) operably connected with the plurality of apertures (105) of the step board (100, 200, 300) and adapted to connect to the vehicle providing an operably actuating step to move between a stowed position and at least one deployed position.

12. The step board assembly of claim 1, wherein the sideboard assembly is adapted to operably couple to a sport utility vehicle or pickup truck; or
wherein the plurality of apertures (105) is not pierced on a closed one piece section.

13. The step board assembly of claim 1 or 2, wherein the plurality of attachment features (106, 208, 308) connecting the first and second pieces (102, 202, 302, 104, 204, 304) together along both longitudinal sides of the upper and lower sections (102, 202, 302, 104, 204, 304).

14. The step board assembly of claim 12, wherein the plurality of attachment features (106, 208, 308) connecting the upper and lower sections (104, 204, 304, 102, 202, 302) together along longitudinal portions of the upper and lower sections (104, 204, 304, 102, 202, 302).

## Patentansprüche

1. Stufenbrettanordnung, die für ein Fahrzeug ausgelegt ist, umfassend:
ein erstes Teil (102, 202, 302) eines Stufenbretts (100, 200, 300);
ein zweites Teil (104, 204, 304) eines Stufenbretts (100, 200, 300), wobei das erste und das zweite Teil (102, 202, 302, 104, 204, 304) ein 2-teiliges Extrusionsbrett bilden, das das erste und zweite Teil (102, 202, 302, 104, 204, 304) umfasst, wobei das erste Teil (102; 202; 302) einen unteren Abschnitt des 2-teiligen Extrusionsbretts bildet und das zweite Teil (104; 204; 304) einen oberen Abschnitt des 2-teiligen Extrusionsbretts bildet;
eine Vielzahl von Öffnungen (105), die in das erste und/oder zweite Teil (102, 202, 302, 104, 204, 304) an vorbestimmten Stellen gelocht sind, bevor sowohl das erste als auch das zweite Teil (102, 202, 302, 104, 204, 304) betriebsfähig miteinander befestigt sind und ausgelegt sind, um selektiv mindestens eine vorbestimmte Komponente (212) mit dem Stufenbrett (100, 200, 300) zu verbinden, wobei die gelochte Öffnung (105) auf einer oberen Oberfläche des zweiten Teils (104; 204; 304) zum Befestigen einer Stufenoberflächenmatte ausgelegt ist; und
mindestens zwei Befestigungsmerkmale (106, 208, 308), die das erste und das zweite Teil (102, 202, 302, 104, 204, 304) an zwei Stellen miteinander verbinden, wobei mindestens eine Innenwand (110, 224, 320) bereitgestellt ist, die Teil eines der Befestigungsmerkmale (106, 208, 308) ist.

2. Stufenbrettanordnung nach Anspruch 1, wobei eines der Befestigungsmerkmale (106, 208, 308) eine mechanische Befestigung (216, 218) mit einer Vielzahl von Befestigungselementen (210, 310) beinhaltet, die das erste und das zweite Teil (102, 202, 302, 104, 204, 304) entlang einer Stelle des Bretts (100, 200, 300) miteinander verbinden, und das andere der Befestigungsmerkmale (106, 208, 308) einen Klebstoff (312) beinhaltet, der das erste und das zweite Teil (102, 202, 302, 104, 204, 304) entlang einer anderen Stelle des Bretts (100, 200, 300) miteinander verbindet.

3. Stufenbrettanordnung nach Anspruch 1, wobei die Stufenbrettanordnung eine Trittbrettstufe ist, die zur Verbindung mit dem Fahrzeug angepasst ist; oder
wobei die mindestens zwei Befestigungsmerkmale (106, 208, 308) mindestens ein Paar von Schnappbefestigungen einschließen, um das erste und das zweite Teil (102, 202, 302, 104, 204, 304) an den zwei Stellen miteinander zu verbinden.

4. Stufenbrettanordnung nach Anspruch 1, wobei die mindestens zwei Befestigungsmerkmale (106, 208, 308) mindestens eine Hakenbefestigung (208, 208a, 208b) und mindestens eine mechanische Befestigung (216, 218) einschließen, um das erste und das zweite Teil (102, 202, 302, 104, 204, 304) an den zwei Stellen miteinander zu verbinden.

5. Stufenbrettanordnung nach Anspruch 1, wobei die mindestens zwei Befestigungsmerkmale (106, 208, 308) mindestens ein Paar mechanischer Befestigungen (216, 218) einschließen, um das erste und das zweite Teil (102, 202, 302, 104, 204, 304) mechanisch an den zwei Stellen miteinander zu befestigen; oder
wobei das erste und das zweite Teil (102, 202, 302, 104, 204, 304) an den zwei Stellen adhäsiv zusammen gebondet sind.

6. Stufenbrettanordnung nach Anspruch 1, wobei ein erstes der mindestens zwei Befestigungsmerkmale (106, 208, 308) eine Hakenkonfiguration (208, 208a, 208b) ist, die das erste und zweite Teil (102, 202, 302, 104, 204, 304) an einer Seite betriebsfähig zusammen befestigt, wobei die Hakenkonfiguration (208, 208a, 208b) einem des ersten oder des zweiten Teils (102, 202, 302, 104, 204, 304) ermöglicht, sich so zu drehen, dass die andere Seite in Kontakt mit dem zweiten Teil (104, 204, 304) gebracht wird, um die andere Seite mit dem anderen Befestigungsmerkmal zu verbinden.

7. Stufenbrettanordnung nach Anspruch 1, wobei eines der Befestigungsmerkmale (106, 208, 308) eine mechanische Befestigung (216, 218) mit einer Vielzahl von Befestigungselementen (210, 310) beinhaltet.

8. Stufenbrettanordnung nach Anspruch 1, wobei das erste und das zweite Teil (104, 204, 304) jeweils Aluminiumstrangpressprofile sind.

9. Stufenbrettanordnung nach Anspruch 1, wobei die Vielzahl von Öffnungen (105) ausgelegt ist, um eine Vielzahl von Befestigungshalterungen mit dem Stufenbrett (100, 200, 300) zu verbinden, wobei die Vielzahl von Befestigungshalterungen zur betriebsfähigen Verbindung mit dem Fahrzeug ausgelegt ist.

10. Stufenbrettanordnung nach Anspruch 1, wobei die Vielzahl von Öffnungen (105) ausgelegt ist, um eine Vielzahl von Gestängen (212) mit dem Stufenbrett (100, 200, 300) zu verbinden, wobei die Vielzahl von Gestängen (212) zur betriebsfähigen Verbindung mit dem Fahrzeug ausgelegt ist; oder
ferner umfassend eine Vielzahl von Befestigungshalterungen, die mit der Vielzahl von Öffnungen (105) an dem Stufenbrett (100, 200, 300) betriebsfähig verbunden und ausgelegt sind, um betriebsfähig mit dem Fahrzeug verbunden zu werden, um eine Fahrzeugstufe bereitzustellen.

11. Stufenbrettanordnung nach Anspruch 1, ferner umfassend eine Vielzahl von Befestigungshalterungen und/oder Gestängen (212), die mit der Vielzahl von Öffnungen (105) des Stufenbretts (100, 200, 300) betriebsfähig verbunden und ausgelegt sind, um mit dem Fahrzeug verbunden zu werden, wodurch eine betriebsfähig betätigbare Stufe bereitgestellt wird, um sich zwischen einer verstauten Position und mindestens einer ausgefahrenen Position zu bewegen.

12. Stufenbrettanordnung nach Anspruch 1, wobei die Seitenbrettanordnung ausgelegt ist, um betriebsfähig mit einem Sport Utility Vehicle oder Pickup-Truck gekoppelt zu werden; oder
wobei die Vielzahl von Öffnungen (105) nicht in einem geschlossenen einteiligen Abschnitt gelocht ist.

13. Stufenbrettanordnung nach Anspruch 1 oder 2, wobei die Vielzahl von Befestigungsmerkmalen (106, 208, 308) das erste und das zweite Teil (102, 202, 302, 104, 204, 304) entlang beider Längsseiten des oberen und des unteren Abschnitts (102, 202, 302, 104, 204, 304) miteinander verbindet.

14. Stufenbrettanordnung nach Anspruch 12, wobei die Vielzahl von Befestigungsmerkmalen (106, 208, 308) den oberen und den unteren Abschnitt (104, 204, 304, 102, 202, 302) entlang Längsabschnitten des oberen und des unteren Abschnitts (104, 204, 304, 102, 202, 302) miteinander verbindet.

## Revendications

1. Assemblage formant planche de marche adapté à un véhicule, comprenant :
une première pièce (102, 202, 302) d'une planche de marche (100, 200, 300) ;
une deuxième pièce (104, 204, 304) d'une planche de marche (100, 200, 300), la première et la deuxième pièce (102, 202, 302, 104, 204, 304) formant une planche d'extrusion en deux pièces comprenant la première et la deuxième pièce (102, 202, 302, 104, 204, 304), la première pièce (102 ; 202 ; 302) constituant une section inférieure de la planche d'extrusion en deux pièces et la deuxième pièce (104 ; 204 ; 304) constituant une section supérieure de la planche d'extrusion en deux pièces ;
une pluralité d'ouvertures (105) percées dans la première et/ou la deuxième pièce (102, 202, 302, 104, 204, 304) à des emplacements prédéterminés avant que la première pièce et la deuxième pièce (102, 202, 302, 104, 204, 304) soient toutes deux fixées l'une à l'autre de manière fonctionnelle, et adaptées pour connecter sélectivement au moins un composant prédéterminé (212) à la planche de marche (100, 200, 300), l'ouverture percée (105) sur une surface supérieure de la deuxième pièce (104 ; 204 ; 304) étant adaptée pour attacher un tapis de surface de marche ; et
au moins deux éléments d'attache (106, 208, 308) connectant la première et le deuxième pièce (102, 202, 302, 104, 204, 304) l'une à l'autre en deux emplacements, dans lequel il est prévu au moins une paroi intérieure (110, 224, 320) formant une partie de l'un ou l'autre des éléments d'attache (106, 208, 308).

2. Assemblage formant planche de marche selon la revendication 1, dans lequel l'un des éléments d'attache (106, 208, 308) incorpore une attache mécanique (216, 218) avec une pluralité de fixations (210, 310) connectant la première et la deuxième pièce (102, 202, 302, 104, 204, 304) l'une à l'autre le long d'un emplacement de la planche (100, 200, 300), et l'autre des éléments d'attache (106, 208, 308) incorpore un adhésif (312) connectant la première et la deuxième pièce (102, 202, 302, 104, 204, 304) l'une à l'autre le long d'un autre emplacement de la planche (100, 200, 300).

3. Assemblage formant planche de marche selon la revendication 1, dans lequel l'assemblage formant planche de marche est une marche de marchepied adaptée pour être connectée au véhicule ; ou
dans lequel lesdits au moins deux éléments d'attache (106, 208, 308) incluent au moins une paire d'attaches à encliquetage pour connecter la première et la deuxième pièce (102, 202, 302, 104, 204, 304) l'une à l'autre dans les deux emplacements.

4. Assemblage formant planche de marche selon la revendication 1, dans lequel lesdits au moins deux éléments d'attache (106, 208, 308) incluent au moins une attache à crochet (208, 208a, 208b) et au moins une attache mécanique (216, 218) pour connecter la première et la deuxième pièce (102, 202, 302, 104, 204, 304) l'une à l'autre dans les deux emplacements.

5. Assemblage formant planche de marche selon la revendication 1, dans lequel lesdits au moins deux éléments d'attache (106, 208, 308) incluent au moins une paire d'attaches mécaniques (216, 218) pour fixer mécaniquement la première et la deuxième pièce (102, 202, 302, 104, 204, 304) l'une à l'autre dans les deux emplacements ; ou
dans lequel la première et la deuxième pièce (102, 202, 302, 104, 204, 304) sont liées l'une à l'autre de manière adhésive dans les deux emplacements.

6. Assemblage formant planche de marche selon la revendication 1, dans lequel un premier desdits au moins deux éléments d'attache (106, 208, 308) est d'une configuration à crochet (208, 208a, 208b) fixant de manière fonctionnelle la première et la deuxième pièce (102, 202, 302, 104, 204, 304) l'une à l'autre sur un côté, la configuration à crochet (208, 208a, 208b) permettant à l'une de la première ou de la deuxième pièce (102, 202, 302, 104, 204, 304) d'être mise en rotation pour amener l'autre côté en contact avec la deuxième pièce (104, 204, 304) pour connecter l'autre côté avec l'autre élément d'attache.

7. Assemblage formant planche de marche selon la revendication 1, dans lequel l'un des éléments d'attache (106, 208, 308) incorpore une attache mécanique (216, 218) avec une pluralité de fixations (210, 310).

8. Assemblage formant planche de marche selon la revendication 1, dans lequel la première et la deuxième pièce (104, 204, 304) sont chacune des extrusions d'aluminium.

9. Assemblage formant planche de marche selon la revendication 1, dans lequel la pluralité d'ouvertures (105) sont adaptées pour connecter une pluralité de supports d'attache à la planche de marche (100, 200, 300), la pluralité de supports d'attache étant adaptés pour être connectés de manière fonctionnelle au véhicule.

10. Assemblage formant planche de marche selon la revendication 1, dans lequel la pluralité d'ouvertures (105) sont adaptées pour connecter une pluralité de tringles (212) à la planche de marche (100, 200, 300), la pluralité de tringles (212) étant adaptées être connectées de manière fonctionnelle au véhicule ; ou
comprenant en outre une pluralité de supports d'attache connectés de manière fonctionnelle à la pluralité d'ouvertures (105) sur la planche de marche (100, 200, 300) et adaptés pour être connectés de manière fonctionnelle au véhicule afin de fournir une marche de véhicule.

11. Assemblage formant planche de marche selon la revendication 1, comprenant en outre une pluralité de supports d'attache et/ou de tringles (212) connectés de manière fonctionnelle à la pluralité d'ouvertures (105) de la planche de marche (100, 200, 300) et adaptés pour une connexion au véhicule fournissant une marche à actionnement fonctionnel pour un déplacement entre une position escamotée et au moins une position déployée.

12. Assemblage formant planche de marche selon la revendication 1, dans lequel l'assemblage formant planche latérale est adapté pour être coupé de manière fonctionnelle à un véhicule utilitaire léger ou à une camionnette ; ou dans lequel la pluralité d'ouvertures (105) ne sont pas percées sur une section fermée d'une seule pièce.

13. Assemblage formant planche de marche selon la revendication 1 ou 2, dans lequel la pluralité d'éléments d'attache (106, 208, 308) connectent la première et la deuxième pièce (102, 202, 302, 104, 204, 304) l'une à l'autre le long des deux côtés longitudinaux des sections supérieure et inférieure (102, 202, 302,104,204,304).

14. Assemblage formant planche de marche selon la revendication 12, dans lequel la pluralité d'éléments d'attache ( 106, 208, 308) connectent les sections supérieure et inférieure (104, 204, 304, 102, 202, 302) l'une à l'autre le long de portions longitudinales des sections supérieure et inférieure (104, 204, 304, 102, 202, 302).
